# EUROPÄISCHE PATENTSCHRIFT

(11) **EP 0 594 898 B1**
(45) Veröffentlichungstag und Bekanntmachung des Hinweises auf die Patenterteilung: **29.12.1997**
(21) Anmeldenummer: 92250314.9
(22) Anmeldetag: 29.10.1992
(51) Int. Cl.: B41B 19/00, G06K 15/02

(54) **Verfahren zum Ausgeben von Multitype-Schrift auf hochauflösenden Ausgabegeräten**
Method for outputting multitype characters on high-resolution output apparatus
Méthode pour sortir des caractères multitypes sur un appareil à haute résolution

(43) Veröffentlichungstag der Anmeldung: 04.05.1994
(73) Patentinhaber: ADOBE SYSTEMS INCORPORATED, Mountain View California 94039-7900 (US)
(72) Erfinder: Karow, Peter, Dr., W-2000 Hamburg 65 (DE)
(74) Vertreter: UEXKÜLL & STOLBERG

(56) Entgegenhaltungen:
- EP-A- 0 453 124
- PATENT ABSTRACTS OF JAPAN vol. 14, no. 191 (P-1038)18. April 1990 & JP-A-20 37 391 (FUJITSU LTD) 7.Februar 1990

## Beschreibung

Die Erfindung betrifft ein Verfahren zum Ausgeben von Schrift auf hochauflösenden Ausgabegeräten nach dem Oberbegriff des Patentanspruchs 1.

Solche hochauflösende Ausgabegeräte sind zum Beispiel elektronische Lichtsatzmaschinen oder hochauflösende Laserdrucker. Diese Geräte enthalten eine eigene Rechnereinheit, die den auszugebenden Text als solchen beispielsweise von einem externen Computer empfängt und unter Verwendung digital gespeicherter Schriften in eine vorgegebene Schriftform von bestimmtem Schrifttyp und bestimmter Schriftgröße umsetzt. Dabei kann auch ein Randausgleich berücksichtigt werden. Die von der Rechnereinheit ausgegebenen Daten enthalten die vollständige Information über das Schriftbild und werden einem Zwischenspeicher zugeführt, der zur Ansteuerung einer Ausgabeeinheit dient, die die Daten zum Beispiel mit Hilfe eines Laserstrahls auf ein Vervielfältigungsmedium wie einen Film oder Papier überträgt.

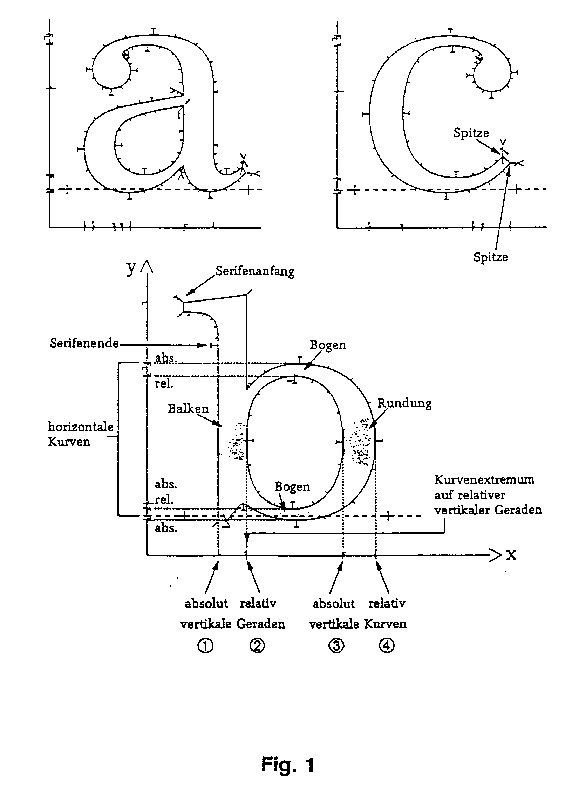

In der computergesteuerten Lichtsatztechnik werden die Schriften digitalisiert gespeichert bereitgestellt, wobei sich heute die Außenlinienkodierung weitgehend durchgesetzt hat, bei der die Konturen oder Ränder eines Buchstabens durch diskrete Kontrollpunkte und verbindende Kurvenelemente beschrieben werden, wie in Figur 1 dargestellt. Als Punkte werden beispielsweise die X-, Y-Koordinaten von Start-, Eck-, Kurven- und Tangentenpunkten digitalisiert und die Kurvenelemente werden von den verschiedenen Herstellern als Geraden und Kreise, Bezier-Funktionen, als Spiralen oder als Spline-Funktionen beschrieben. Eine Übersicht über die digitalen Schriftformate ist in dem Buch "Digitale Schriften", Peter Karow, Springer-Verlag, Berlin Heidelberg, 1992, zu finden. Neben den Kontrollpunkten zur Definition der Umrißlinie enthalten die Buchstaben sogenannte Instruktionen, die bei der Rasterung für die Ausgabe des Buchstabens beispielsweise auf einem Laserdrucker oder einem Bildschirm verwendet werden und heute von allen Herstellern digitaler Schriften zum "intelligenten Rastern" (Intelligent Font Scaling) angewendet werden (vgl. Buch "Schrifttechnologie", Peter Karow, Springer-Verlag, Berlin Heidelberg, 1992; Kapitel 7).

Bei anspruchsvollen Textgestaltungen besteht der Bedarf, die in ihrer Design-Größe gespeicherte Schrift je nach Anwendungszweck und Gestaltungswünschen in ihrem Schriftbild zu variieren, nämlich in eine gewünschte Schriftgröße (Punktgröße) und in eine gewünschte Breite (Alphabetlänge) zu bringen sowie einen gewünschten Fettegrad zu erzeugen. Bei den digital gespeicherten Schriften wird heute meist lediglich eine Master-Schrift für jeden Schrifttyp verwendet und diese je nach der gewünschten Darstellung linear umskaliert; dieses Verfahren ist jedoch nicht ausreichend, um typographisch richtige Ergebnisse zu erzielen.

Die Schriftgröße wird in einer typographischen Einheit gemessen, die mit Punkt (pt) bezeichnet wird, und es ist: 1 pt = 0,375 mm. Die heute meist verwendete lineare Umskalierung digital gespeicherter Schriften ist in verschiedener Hinsicht unbefriedigend.

Die durch lineare Vergrößerung/Verkleinerung aus einem Master hergestellten Schriftgrößen sind im Hinblick auf ihre Lesbarkeit und den ästhetischen Gesamteindruck den optisch richtig und typographisch passend hergestellten Schriftgrößen eindeutig unterlegen. Das typographisch richtige "Optische Skalieren" (englisch: Optical Scaling), wie es früher bei der gesonderten Herstellung der unterschiedlichen Schriftgrößen einer Schrifttype angewendet wurde, berücksichtigt, daß das Auflösungsvermögen des menschlichen Auges begrenzt ist. Wir brauchen bei klein gedrucktem Text (z.B. 5 pt) größere Buchstabenabstände als bei normalen Buchtexten (z.B. 9 pt), damit die Buchstaben nicht zusammenwachsen und die kleinen Texte noch lesbar bleiben. Das gleiche gilt für kleine weiße Innenräume wie im Kleinbuchstaben e. Sehr dünne Striche (z.B. Zierlinen, sogenannte Haarstriche) müssen bei kleinen Schriftgrößen verstärkt werden, damit sie überhaupt erkennbar bleiben und nicht schon durch den Druckprozeß "durchbrechen", d.h. teilweise verschwinden. Geht man umgekehrt zu großer Beschriftung über (Werbung, Plakate, Titel), können die Buchstaben durchaus relativ eng zusammengestellt werden, Weiß- oder Innenräume klein bleiben und Haarlinien dünn sein. Dies läßt sich, wenn man von einem Master in der Designgröße der Schrift ausgeht, etwa folgendermaßen zusammenfassen:

Je kleiner die Schriftgröße wird,
1) desto weiter der Satz,
2) desto offener (breiter) die Buchstaben und
3) desto stärker die Strichführung.

Je größer die Schriftgröße wird,
1) desto enger der Satz,
2) desto schmaler können die Buchstaben sein und
3) desto feiner können insbesondere die Haarstriche sein.

In der nachveröffentlichten EP-A-0 580 900 der Anmelderin wird ein Verfahren zur Ausgabe von Schrift vorgeschlagen, mit dem ausgehend von einer einzigen Master-Schrift eine optische Skalierung automatisch durchführbar ist. In dem dort beschriebenen Verfahren wird die in einer mittleren Punktgröße gespeicherte Master-Schrift zunächst mit einem Faktor auf die gewünschte Punktgröße linear umskaliert und anschließend die Instruktionen dazu verwendet, die Strichstärke der mit dem Faktor linear umskalierten Buchstaben in einer ersten vorgegebenen Abhängigkeit von dem Faktor kontinuierlich zu variieren, wobei die Strichstärke für Faktoren kleiner eins um einen durch die vorgegebene Abhängigkeit vorgegebenen Prozentsatz erhöht und für Faktoren größer eins um einen durch die vorgegebene Abhängigkeit vorgegebenen Prozentsatz verringert wird.

Desweiteren spielt für den typographisch richtigen Satz das Problem des Expandierens/Kondensierens (Verbreitern/Verschmälern) eine Rolle. Früher konnte dieser Bedarf nur durch das Angebot expandierter bzw. kondensierter Schriften befriedigt werden. Diese breiteren bzw. schmaleren Varianten einer Druckschrift mußten durch teure Handarbeit gefertigt werden. Deshalb wurden sie aus Kostengründen für die meisten Schriften nicht hergestellt und angeboten. Die einfache lineare Verbreiterung/Verschmälerung der Buchstaben, wie sie heute vielfach in der computergesteuerten Lichtsatztechnik üblich ist, führt nicht zu typographisch richtig expandierten/kondensierten Schriften, denn dabei werden die Buchstaben im Ganzen, d.h. sowohl die schwarzen Buchstabenstriche als auch die weißen Innenräume in den Buchstaben und zwischen ihnen im gesetzten Wort linear verbreitert bzw. verschmälert. Für typographisch richtig expandierte/kondensierte Schriften dürfen die Weißräume, nicht aber die Strichstärken verändert werden. In der nachveröffentlichten EP-A-0 580 900 der Anmelderin wird ein Verfahren zur Ausgabe von Schrift vorgeschlagen, bei dem ausgehend von einer einzigen Master-Schrift die auszugebende Schrift durch lineares Expandieren oder Kondensieren mit einem Faktor auf die gewünschte Breite gebracht wird und anschließend die Instruktionen dazu verwendet werden, die Strichstärke beim linearen Expandieren oder Kondensieren der Buchstaben konstant zu halten und auf diese Weise nur die Innenräume zu verbreitern oder zu verschmälern.

Im März 1991 hat die Firma Adobe Systems, Kalifornien, ein Konzept namens "Multiple Master" vorgestellt, mit dem erstmals automatisch eine Schriftdarstellung mit
1. Optischer Skalierung auf eine gewünschte Punktgröße,
2. Expandieren/Kondensieren auf eine gewünschte Alphabetlänge
3. Erzeugung eines gewünschten Fettegrades
in einem einzigen System automatisch herstellbar ist.

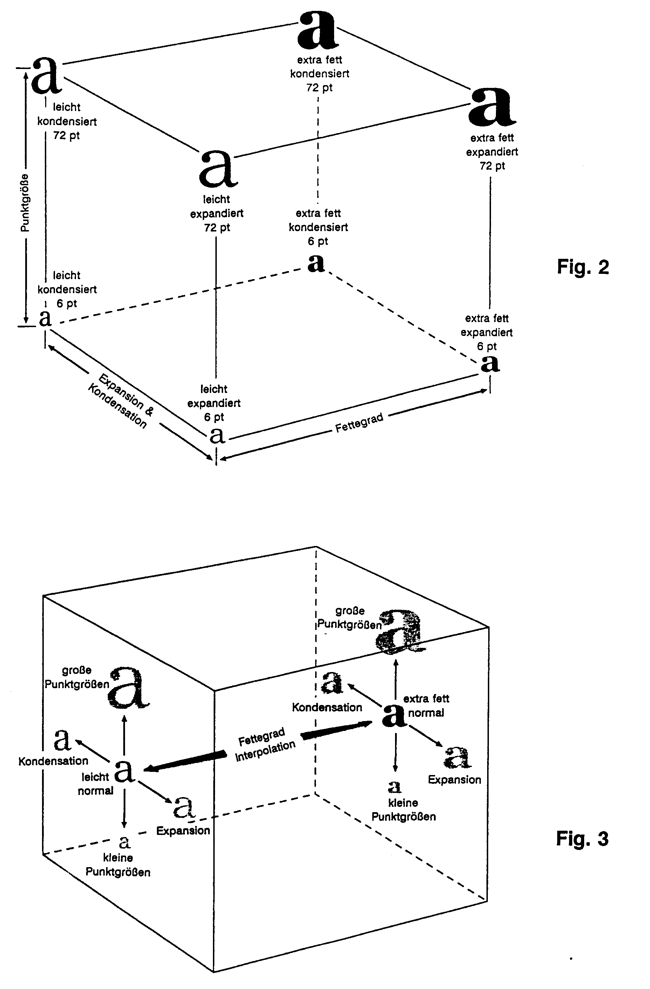

Das Zusammenwirken der drei schriftvariierenden Operationen (Optisches Skalieren, Expandieren/Kondensieren, Erzeugung eines Fettegrades) ist schematisch in Figur 2 dargestellt. Die Schriftinterpolation ist anhand eines Würfels dargestellt, wobei entlang der einen Achse die Punktgröße (optisches Skalieren), entlang der zweiten Achse die Alphabetlänge (Expandieren/Kondensieren) und entlang der dritten Achse der Fettegrad kontinuierlich variiert. Die Darstellung einer gewünschten Schrift basiert auf linearer Interpolation zwischen abgespeicherten Master-Schriften mit unterschiedlicher Punktgröße, Alphabetlänge und Fettegrad. Demzufolge werden acht Master-Schriften benötigt, um eine Schriftdarstellung mit gewünschter Punktgröße, Alphabetlänge und Fettegrad erzeugen zu können. Diese acht Master-Schriften entsprechen den acht Eckpunkten des in Figur 2 dargestellten Würfels. Ein schwerwiegender Nachteil dieses Verfahrens liegt darin, daß acht Master-Schriften benötigt werden, was einerseits hohen Speicherplatzbedarf (ca. 50 KByte pro Master-Schrift) zur Folge hat und andererseits großen Zeitaufwand bei der Herstellung der Master-Schriften bedeutet. Außerdem ergibt sich folgende Schwierigkeit: Bei der Herstellung von acht Master-Schriften ist es erforderlich, gleichzeitig jeweils die acht Varianten eines Buchstabens unter Kontrolle zu behalten, d.h. alle acht Varianten müssen mit digitalisierten Daten derart versehen werden, daß sie linear interpolierbar bleiben. Insbesondere muß darauf geachtet werden, daß in allen Fällen die Digitalisierungspunkte in Zahl, Art und Lage gleich sind und daß die Instruktionen für das "Intelligent Font Scaling" in Zahl, Art und Parametrisierung gleich sind. Tritt zum Beispiel im nachhinein bei nur einem Buchstaben ein nachzubessernder Fehler in der Erscheinung (Digitalisierungspunkte) oder bei der Verarbeitung (Instruktionen) auf, muß man die zugehörigen sieben anderen Buchstabenvarianten ebenfalls korrigieren, was insgesamt zu einem erheblichen Zeitaufwand in der Herstellung der Master-Schriften führt.

Es ist Aufgabe der Erfindung, ein Verfahren zum Ausgeben von Schrift auf hochauflösenden Ausgabegeräten, wie hochauflösenden Druckern und elektronischen Lichtsatzmaschinen, anzugeben, mit dem ausgehend von einer möglichst geringen Anzahl digital gespeicherten Master-Schriften der Fettegrad, die Punktgröße und die Alphabetlänge der auszugebenden Schrift typographisch richtig automatisch erzeugt werden können.

Gemäß der vorliegenden Erfindung wird in einem Verfahren zum Ausgeben von Schrift auf hochauflösenden Ausgabegeräten, wie insbesondere Lichtsatzmaschinen, welche eine Rechnereinheit, einen Zwischenspeicher für die auszugebenden Schriftdaten und eine Ausgabeeinheit, die die aus dem Zwischenspeicher übernommenen Daten direkt auf ein Vervielfältigungsmedium überträgt, aufweisen, wobei die Rechnereinheit eine Mehrzahl gespeicherter Master-Schriften verwendet, die jeweils in einer digitalisierten Konturkodierung gespeichert sind, bei der jeder Buchstabe mit einer Mehrzahl seine Kontur festlegenden diskreten Kontrollpunkten und zusätzlich mit Instruktionen, wie sie für das "Intelligent Font Scaling" vorgeschrieben sind, versehen ist, wobei eine zur Ausgabe nach Fettegrad, Punktgröße und Alphabetlänge ausgewählte Schrift vor der Weitergabe an den Zwischenspeicher erzeugt wird, indem sie aus der Mehrzahl der gespeicherten Master-Schriften durch optische Skalierung auf die gewünschte Schriftgröße, durch Expandieren/Kondensieren auf die gewünschte Alphabetlänge und durch Erzeugung des gewünschten Fettegrades hergestellt wird,
erfindungsgemäß eine Ausgabeschrift mit dem gewünschten Fettegrad durch lineare mathematische Interpolation zwischen zwei Master-Schriften mit unterschiedlichen Fettegraden erzeugt,
die optische Skalierung durchgeführt, indem die Ausgabeschrift mit einem Faktor auf die gewünschte Punktgröße umskaliert und die Instruktionen dazu verwendet werden, die Strichstärke der mit dem Faktor linear umskalierten Buchstaben in einer ersten vorgegebenen Abhängigkeit von dem Faktor kontinuierlich zu variieren, wobei die Strichstärke für Faktoren kleiner eins um einen durch die vorgegebene Abhängigkeit vorgegebenen Prozentsatz erhöht und für Faktoren größer eins um einen durch die vorgegebene Abhängigkeit vorgegebenen Prozentsatz verringert wird, und
die gewünschte Alphabetlänge erzeugt, indem die optisch skalierte Ausgabeschrift durch lineares Expandieren oder Kondensieren mit einem zweiten Faktor auf die gewünschte Breite gebracht wird, wobei die Instruktionen verwendet werden, um die Strichstärke beim linearen Expandieren oder Kondensieren der Buchstaben konstant zu halten und auf diese Weise nur die Weißräume zu verbreitern oder zu verschmälern.

Mit dem erfindungsgemäßen Verfahren werden nur noch zwei Master-Schriften benötigt, da eine lineare Interpolation nur noch zum Erzeugen des gewünschten Fettegrades durchgeführt wird.

Die Erfindung wird im folgenden anhand von Ausführungsbeispielen in den Figuren erläutert. Es zeigen:
- Figur 1: Buchstaben, auf deren Außenlinien Punkte zur digitalen Speicherung dargestellt sind;
- Figur 2: Schemadarstellung der Wirkungsweise eines kombinierten Verfahrens zur Schriftdarstellung aus acht Master-Schriften;
- Figur 3: Schemadarstellung der Wirkungsweise des erfindungsgemäßen kombinierten Verfahrens zur Schriftdarstellung aus zwei Master-Schriften;
- Figur 4 und 5: beschreibende Elemente einer Schrift, die durch Instruktionen definiert werden;
- Figur 6: Variation der Strichstärke als Funktion der Punktgröße beim optischen Skalieren; und
- Figur 7: Gegenüberstellung von linear expandierten/kondensierten (links) und typographisch richtig expandierten/kondensierten Buchstaben (rechts).

In Figur 1 sind Beispiele für die Definition der Außenlinien von Buchstaben durch diskrete Punkte dargestellt; eine ausführliche Beschreibung der gängigen Speicherung und Verfahren zur Buchstabendefinition sind in dem Buch "Digitale Schriften" von Peter Karow, Springer Verlag, Berlin-Heidelberg, 1992, zu finden.

In dem erfindungsgemäßen Verfahren werden zwei Master-Schriften mittlerer Punktgröße und mittlerer Alphabetlänge verwendet, wobei die erste einen niedrigen Fettegrad und die zweite einen hohen Fettegrad aufweist. Zwischen diesen wird die Schriftdarstellung mit dem gewünschten Fettegrad durch lineare Interpolation erzeugt. Die beiden Master-Schriften liegen in der schematischen Darstellung der Schrifterzeugung in Figur 3 in der Mitte der Stirnseite und in der Mitte der abgewandten Seite des Würfels, der die verschiedenen Schriftdarstellungen darstellt. Nach Erzeugung des gewünschten Fettegrades werden die Buchstaben unter Verwendung der Instruktionen automatisch durch optisches Skalieren auf die Punktgröße und Expandieren/Kondensieren auf die gewünschte Alphabetlänge gebracht. Das Verfahren zur optischen Skalierung mit Hilfe der Instruktionen und des Expandierens/Kondensierens sind in der erwähnten EP-A-0 580 900 beschrieben.

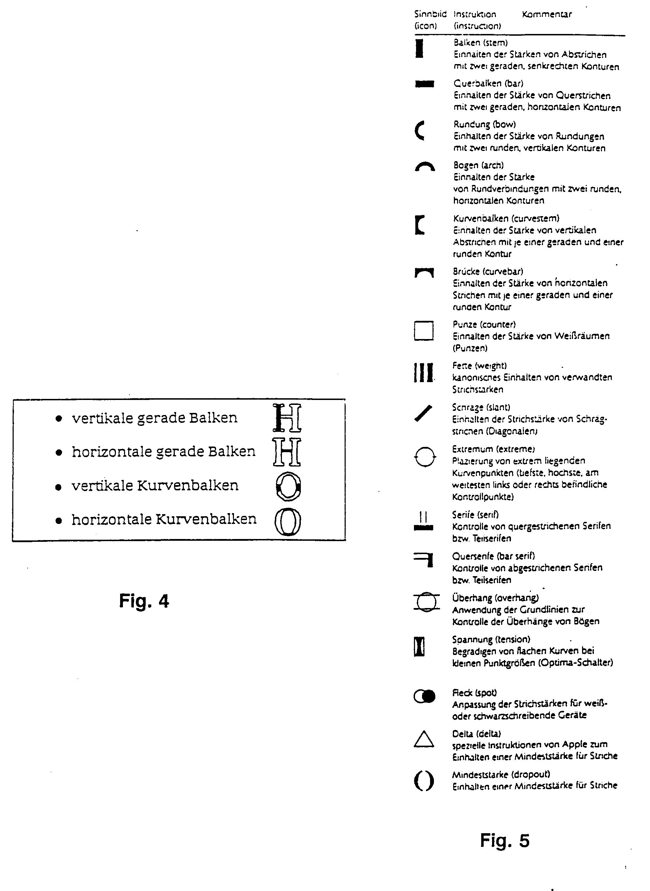

Im folgenden werden die Bedeutung der Instruktionen in digital gespeicherten Schriften und ihre Verwendung beim automatischen optischen Skalieren und Expandieren/Kondensieren erläutert. Neben den Punkten zur Definition der Umrißlinie enthalten die Buchstaben sogenannte Instruktionen, die für die Ausgabe des Buchstabens beispielsweise auf einem Laserdrucker eine intelligente Ausführung der Rasterung gestatten. Instruktionen werden auch als "hints" oder "Schalter" bezeichnet. Sie enthalten zunächst eine Kennung für die Art der Instruktion, z.B. Balken; eine Übersicht über die gängigen Arten von Instruktionen geben die Figuren 4 und 5. Zusätzlich enthält die Instruktion Information darüber, wo sich das Element, beispielsweise der Balken, befindet und wie breit er ist. Verschiedene Instruktionen enthalten unter Umständen verschiedene Informationen zur Steuerung der Rasterung. Eine Instruktion bewirkt, daß die wichtigen beschreibenden Elemente, wie in Figur 5 aufgeführt, einer Schrift in homogener Weise gerastert werden. Zur näheren Erläuterung kann ein Balken, ein gerader senkrechter Abstrich (wie z.B. beim I) betrachtet werden. Mit Hilfe der Balken-Instruktion stehen die Teile des Umrisses automatisch zur Verfügung, die die linke und rechte Begrenzung bilden. Um unglückliche Zufälle beim Rastern zu vermeiden, wird nun der linke Rand des I-Balkens auf die nächstgelegene Gitterlinie des Rasters verschoben. Das wird durch eine X-Verschiebung bewirkt, die auf alle Koordinaten der Umrißlinie angewendet wird. Also tritt noch keine Formveränderung des Buchstabens ein. Der rechte Rand wird dann auf die Gitterlinie geschoben, die um eine bestimmte Zahl von Gitterpunkten rechts vom linken Rand liegt. Diese feste Zahl wird vorher aus der Art der Instruktion allgemein für die ganze Schrift bestimmt. Dabei geht man von der mittleren Stärke des beschreibenden Elements, im vorliegenden Fall der mittleren Balkendicke aus, und ermittelt durch Aufrunden die bestmögliche Anzahl von Rasterpunkten für die Darstellung der Balkendicke. Auf diese Weise kann es zu einer Formveränderung des I derart kommen, daß das I nach der Verschiebung des rechten Randes eine etwas dünnere oder dickere Balkenstärke hat. Es wird eine solche Balkenstärke erreicht, die Zufallseffekte beim nachfolgenden Rastern automatisch vermeidet und die im Einklang mit den übrigen Balkenstärken der Schrift steht. Das Vorsehen der Instruktionen und diese Verfahrensweise bewirken also, daß man Balken oder auch andere Buchstabenelemente erzwungenermaßen entweder verdicken oder verdünnen kann, oder diese Elemente (wie den Balken) kontrolliert, z.B. insgesamt nach links oder rechts rücken kann. Diese Verfahrensweise, die eine einheitliche Rasterung der Elemente in den Ausgabegeräten ermöglicht, wird auch als "Intelligent Font Scaling" bezeichnet. Sie ist also ursprünglich zur Vermeidung von zufälligen Rasterungen für die niedrigen Auflösungen von Bildschirmen und Laserdruckern erfunden worden.

Die Instruktionen werden in dem erfindungsgemäßen Verfahren zunächst zu einer willkürlich feingestuften Verdickung/Verdünnung der Strichstärken der Buchstaben bei hochauflösenden Geräten wie den Lichtsetzmaschinen verwendet, um eine typographisch richtige optische Skalierung in Abhängigkeit von der erzeugten Punktgröße zu erreichen, wobei die Strichstärke für Faktoren kleiner eins um einen durch die vorgegebene Abhängigkeit vorgegebenen Prozentsatz erhöht und für Faktoren größer eins um einen durch die vorgegebene Abhängigkeit vorgegebenen Prozentsatz verringert wird. Dadurch wird bewirkt, daß kleinere Punktgrößen eine im Verhältnis größere Strichstärke und größere Punktgrößen eine im Verhältnis geringere Strichstärke aufweisen. Dadurch wird bewirkt, daß auch kleinere Punktgrößen angenehm und gut lesbar bleiben, was insbesondere wichtig sein kann, wenn Texte mehrfach kopiert oder per Telefax übermittelt werden. In diesen Fällen sind die optisch skalierten Texte wesentlich besser lesbar und den traditionell linear umskalierten eindeutig überlegen.

Eine Verdickung beispielsweise des Kleinbuchstabens b (siehe Figur 1) erfolgt derart, daß in zwei Schritten zunächst die beiden senkrechten Balken (linker Balken, rechte Rundung) und dann die beiden waagerechten Elemente (oberer Bogen und unterer Bogen) bearbeitet werden. Beide Schritte laufen voneinander unabhängig ab. Der erste Schrit besteht aus folgendem Vorgehen: mit Hilfe der vier Balkeninstruktionen (zwei absolute Grenzen - (1) und (3) - und zwei relative Grenzen (2) und (4)) werden alle Kontrollpunkte, die links von Grenze (1) liegen, festgehalten. Auf die rechts der Grenze (2) liegenden Kontrollpunkte wird in x-Richtung das Verdickungsmaß addiert. Auf die Kontrollpunkte mit x-Koordinaten zwischen Grenze (1) und (2) wird das Verdickungsmaß linear interpolierend addiert, bei (1) mit Null, dann linear wachsend, bis bei (2) voll addiert wird. Damit ist der linke Balken verdickt. Die rechte Rundung wird ebenso bearbeitet. Links von Grenze (3) werden die x-Koordinaten festgehalten, zwischen (3) und (4) wird das Verdickungsmaß linear interpolierend addiert, rechts von (4) voll addiert. Analog werden in y-Richtung die beiden Bögen bearbeitet.

Eine Verdünnung kann ganz analog mit einem Verdünnungsmaß durch Subtraktion erreicht werden.

Das Expandieren des Buchstabens b erfolgt zunächst durch bloßes Anwenden eines x-Faktors auf alle x-Koordinaten, d.h. die x-Achse (Breite) des Buchstabens wird gedehnt. Dabei werden beim b auch der Balken und die Rundung um diesen Faktor breiter (dicker). Doch mit Hilfe der alten Angaben für die Balkengrenzen (bevor der Faktor angewendet worden ist) kann die ursprüngliche Strichstärke und damit ein Verdünnungsmaß automatisch ermittelt werden.

Dann wird die Grenze (1) und alles links davon liegende festgehalten. Die Grenze (2) wird um das Verdünnungsmaß nach links geschoben, zwischen (1) und (2) wird linear interpolierend verschoben, und rechts von (2) wird ebenfalls linear interpolierend so nach links verschoben, daß in der Nähe von (2) das Verdünnungsmaß voll addiert wird und auf der Mitte zwischen (2) und (3) auf Null abfällt. Analog wird für die Rundung anhand der alten Grenzen (3) und (4) ein Verdünnungsmaß ermittelt und wie oben angewendet.

Eine Kondensierung wird ähnlich ausgeglichen durch die Ermittlung und Verarbeitung eines Verdickungsmaßes in x-Richtung.

In dem erfindungsgemäßen Verfahren wird der Schritt der optischen Skalierung durchgeführt, indem ausgehend von einer Schrift, die in einer mittleren Punktgröße von beispielsweise 12 pt vorliegt, jeder Buchstabe auf die gewünschte Punktgröße mit einem Faktor linear umskaliert wird, und anschließend die Instruktionen verwendet werden, um die Strichstärke des Buchstabens kontinuierlich, mit einer ersten vorgegebenen Abhängigkeit von dem Faktor zu verändern.

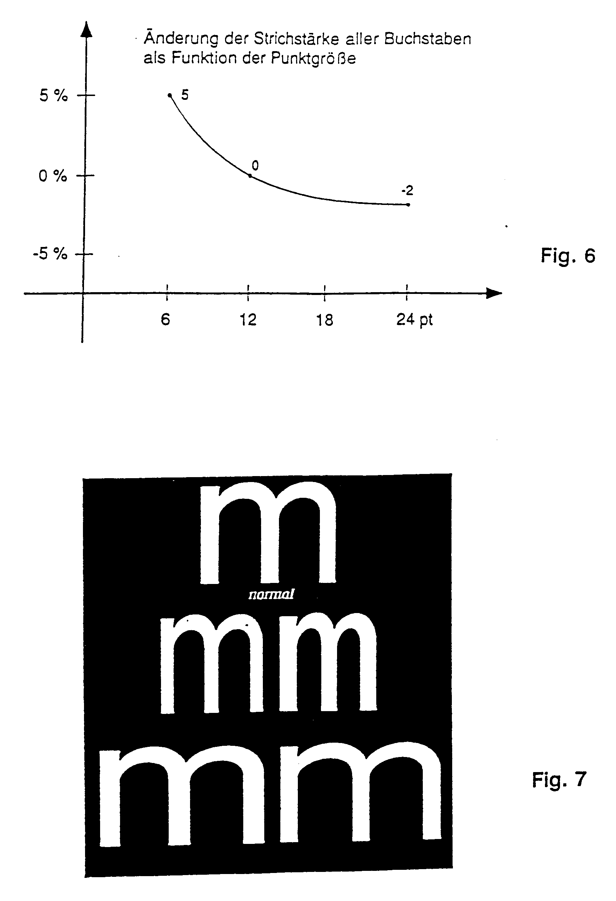

Die erste vorgegebene Abhängigkeit ist in Figur 6 dargestellt, die die prozentuale Änderung der Strichstärke als Funktion der Punktgröße, auf die umskaliert wird, zeigt. Die Strichstärke wird bei Übergang zu kleinen Punktgrößen verstärkt, in diesem Ausführungsbeispiel wird die Strichstärke beim Übergang auf die Punktgröße 6 pt um 5 % erhöht, während sie beim Übergang zu sehr großen Buchstaben der Größe 24 pt um 2 % erniedrigt wird.

In einer bevorzugten Ausführungsform der Erfindung wird beim optischen Skalieren ferner die Breite der umskalierten Buchstaben in einer zweiten vorgegebenen Abhängigkeit von dem Umskalierungsfaktor variiert, wobei die Breite bei Übergang zu kleineren Punktgrößen erhöht und bei Übergang zu größeren Punktgrößen erniedrigt wird. Ferner wird die Höhe der Kleinbuchstaben in einer dritten vorgegebenen Abhängigkeit von dem Faktor variiert, wobei die Höhe bei Übergang zu kleinen Punktgrößen vergrößert und bei Übergang zu großen Punktgrößen verringert wird. Gemäß einer vierten vorgegebenen Abhängigkeit können die Buchstabenzwischenräume in Prozent der Großbuchstabenhöhe als Funktion der Punktgröße verändert werden. Beispiele für die vorgegeben Abhängigkeiten zur optischen Skalierung sind in der erwähnten EP-A-0 580 900 der Anmelderin aufgeführt.

Die Wirkungsweise des typographisch richtigen Kondensierens/Expandierens gegenüber dem linearen ist in Figur 7 dargestellt. Der Buchstabe m ist auf der linken Seite in traditioneller Weise einfach linear verschmälert bzw. verbreitert gegenüber einer typographisch richtigen Expandierung auf der rechten Seite, wo die Strichstärke mit Hilfe der Instruktionen konstant gehalten ist und auf diese Weise beim Verbreitern/Verschmälern nur die Innenräume der Buchstaben verbreitert oder verschmälert werden.

## Patentansprüche

1. Verfahren zum Ausgeben von Schrift auf hochauflösenden Ausgabegeräten, wie insbesondere Lichtsatzmaschinen, welche eine Rechnereinheit, einen Zwischenspeicher für die auszugebenden Schriftdaten und eine Ausgabeeinheit, die die aus dem Zwischenspeicher übernommenen Daten direkt auf ein Vervielfältigungsmedium überträgt, aufweisen, wobei die Rechnereinheit eine Mehrzahl gespeicherter Master-Schriften verwendet, die jeweils in einer digitalisierten Konturkodierung gespeichert sind, bei der jeder Buchstabe mit einer Mehrzahl seine Kontur festlegenden diskreten Kontrollpunkten und zusätzlich mit Instruktionen, wie sie für das "Intelligent Font Scaling" vorgeschrieben sind, versehen ist, wobei eine zur Ausgabe nach Fettegrad, Punktgröße und Alphabetlänge ausgewählte Schrift vor der Weitergabe an den Zwischenspeicher erzeugt wird, indem sie aus der Mehrzahl der gespeicherten Master-Schriften durch optische Skalierung auf die gewünschte Schriftgröße, durch Expandieren/Kondensieren auf die gewünschte Alphabetlänge und durch Erzeugung des gewünschten Fettegrades hergestellt wird,
**dadurch gekennzeichnet,**
- daß eine Ausgabeschrift mit dem gewünschten Fettegrad durch lineare mathematische Interpolation zwischen zwei Master-Schriften mit unterschiedlichen Fettegraden erzeugt wird,
- daß die optische Skalierung durchgeführt wird, indem die Ausgabeschrift mit einem Faktor auf die gewünschte Punktgröße umskaliert und die Instruktionen dazu verwendet werden, die Strichstärke der mit dem Faktor linear umskalierten Buchstaben in einer ersten vorgegebenen Abhängigkeit von dem Faktor kontinuierlich zu variieren, wobei die Strichstärke für Faktoren kleiner eins um einen durch die vorgegebene Abhängigkeit vorgegebenen Prozentsatz erhöht und für Faktoren größer eins um einen durch die vorgegebene Abhängigkeit vorgegebenen Prozentsatz verringert wird, und
- daß die gewünschte Alphabetlänge erzeugt wird, indem die optisch skalierte Ausgabeschrift durch lineares Expandieren oder Kondensieren mit einem zweiten Faktor auf die gewünschte Breite gebracht wird, wobei die Instruktionen verwendet werden, um die Strichstärke beim linearen Expandieren oder Kondensieren der Buchstaben konstant zu halten und auf diese Weise nur die Weißräume zu verbreitern oder zu verschmälern.

2. Verfahren nach Anspruch 1, **dadurch gekennzeichnet**, daß beim optischen Skalieren auf die gewünschte Punktgröße ausgehend von einer Schrift in der Größe 12 pt die Strichstärke bei Umskalierung auf eine Schriftgröße von 6 pt um etwa 5% verstärkt und bei einer Umskalierung auf eine Schriftgröße von 24 pt um etwa 2% abgeschwächt wird.

3. Verfahren nach einem der vorhergehenden Ansprüche, **dadurch gekennzeichnet**, daß beim optischen Skalieren auf die gewünschte Punktgröße die Breite der linear umskalierten Buchstaben in einer zweiten vorgegebenen Abhängigkeit von dem Faktor variiert wird, wobei die Breite bei Faktoren kleiner 1 erhöht und bei Faktoren größer 1 erniedrigt wird, und daß die Höhe der Kleinbuchstaben in einer dritten vorgegebenen Abhängigkeit von dem Faktor variiert wird, wobei die Höhe bei Faktoren kleiner 1 vergrößert und bei Faktoren größer 1 verringert wird.

4. Verfahren nach Anspruch 3, **dadurch gekennzeichnet**, daß beim optischen Skalieren auf die gewünschte Punktgröße ausgehend von einer Master-Schrift in Größe 12 pt bei linearer Umskalierung auf eine Schriftgröße von 6 pt die Breite der Buchstaben um etwa 15% erhöht und bei Umskalierung auf eine Schriftgröße von 24 pt etwa 1% erniedrigt wird, und daß die Buchstabenhöhe der Kleinbuchstaben bei Umskalierung auf eine Schriftgröße von 6 pt um bis zu 15% erhöht und bei einer Umskalierung auf eine Schriftgröße von 24 pt bis zu 1% verringert wird.

5. Verfahren nach einem der vorhergehenden Ansprüche, **dadurch gekennzeichnet**, daß beim optischen Skalieren auf die gewünschte Punktgröße die Buchstabenzwischenräume der linear umskalierten Schrift bei Faktoren kleiner 1 um einen prozentualen Anteil der Großbuchstabenhöhe verbreitert und bei Faktoren kleiner 1 um einen prozentualen Anteil der Großbuchstabenhöhe verkürzt werden.

6. Verfahren nach Anspruch 5, **dadurch gekennzeichnet**, daß beim optischen Skalieren auf die gewünschte Punktgröße ausgehend von einer Master-Schrift in der Größer 12 pt die Buchstabenzwischenräume um etwa 6% der Großbuchstabenhöhe bei Umskalierung auf eine Schriftgröße von 6 pt verbreitert und um etwa 4% der Großbuchstabenhöhe bei Umskalierung auf die Schriftgröße 24 pt verkürzt werden.

7. Verfahren nach einem der vorhergehenden Ansprüche, **dadurch gekennzeichnet**, daß beim optischen Skalieren auf die gewünschte Punktgröße die Buchstaben der linear umskalierten Schrift bei Umskalierung mit Faktoren kleiner 1 mit einer gleichmäßigen Außenkonturierung versehen werden, deren Stärke in einer vierten vorgegebenen Abhängigkeit von der Großbuchstabenhöhe steht, und daß bei Umskalierung mit Faktoren größer 1 eine gleichmäßige Innenkonturierung vorgenommen wird, deren Stärke in einer fünften vorgegebenen Abhängigkeit von der Großbuchstabenhöhe besteht.

8. Verfahren nach Anspruch 7, **dadurch gekennzeichnet**, daß beim optischen Skalieren auf die gewünschte Punktgröße ausgehend von einer Master-Schrift in der Größe 12 pt die umskalierten Buchstaben bei Umwandlung auf die Schriftgröße 6 pt mit einer gleichmäßig dicken Außenkontur von etwa 0,5% der Großbuchstabenhöhe versehen, und daß bei Umskalierung auf die Schriftgröße 24 pt eine gleichmäßig starke Innenkontur mit einer Dicke von etwa 0,2% der Großbuchstabenhöhe vorgenommen wird.

## Claims

1. A method for generating the output of fonts on high resolution output devices, as in particular phototypesetters, which device comprises a processor unit, an intermediate storage for font data to be output and an output unit which transfers data received from the intermediate storage directly onto a multiplication medium, wherein the processor unit uses a plurality of stored master fonts, each of which is stored in a digitized contour coding in which each letter is provided with a plurality of descrete control points determining its contour and additionally with instructions as prescribed for the "Intelligent Font Scaling", wherein a font is generated for output, with a desired weight, point size and alphabet length, before transfer to the intermediate storage by being generated from the plurality of stored master fonts by optical scaling to the desired font size, by expansion, condensation to the desired alphabet length and by generating the desired weight,
characterized
in that an output font with the desired weight is generated by mathematical interpolation between two master fonts of differing weights;
in that the optical scaling is performed by re-scaling the output font with a factor to the desired point size and by utilizing the instructions to steadily vary the stroke width of the linearily re-scaled letters in a first pre-determined dependency on said factor, wherein the stroke width is, for factors less than 1, increased by a percentage pre-determined by said pre-determined dependency and is, for factors larger than 1, decreased by a percentage pre-determined by said pre-determined dependency, and
in that the desired alphabet length is generated by linearily expanding or condensing the optically scaled output font with a second factor, wherein the instructions are utilized to hold the stroke width constant during linear expansion or condensation and in this way to only broaden or narrow the white spaces.

2. A method as in Claim 1, characterized in that in the optical scaling to the desired point size, when starting from a master font in the size 12 pt, the stroke width is thickened by approximately 5% upon re-scaling to a font size of 6 pt, and is thinned by approximately 2% upon a re-scaling to a font size of 24 pt.

3. A method as in one of the preceding claims, characterized in that in the optical scaling to the desired point size the width of the linearily re-scaled letters is varied in a second pre-determined dependency on said factor, wherein the width is increased for factors smaller than 1 and is decreased for factors larger than 1, and that the height of lower case letters is varied in a third pre-determined dependency, wherein the height is increased for factors smaller than 1 and is decreased for factors larger than 1.

4. A method as in Claim 3, characterized in that in the optical scaling to the desired point size, when starting from a master font in the size 12 pt, the width of letters is increased by approximately 15% upon linear re-scaling to a font size of 6 pt, and is reduced approximately by 1% upon re-scaling to a font size of 24 pt, and that the letter height of lower case letters is increased up to 15% upon re-scaling to a font size of 6 pt, and is reduced up to 1% upon re-scaling to a font size of 24 pt.

5. A method as in one of the preceding claims, characterized in that in the optical scaling to the desired point size the letter spaces of the linearily re-scaled font are broadened by a percentage of the capital letter height for factors smaller than 1, and are shortened by a percentage of the capital letter height for factors smaller than 1.

6. A method according to Claim 5, characterized in that in the optical scaling to the desired point size, when starting from a master font in the size 12 pt, letter spaces are broadened by approximately 6% of the capital letter height upon re-scaling to a font size of 6 pt, and are shortened by approximately 4% of the capital letter height upon re-scaling to a 24 pt font size.

7. A method as in one of the preceding claims, characterized in that in the optical scaling to the desired point size the letters of the lineary re-scaled font are, upon re-scaling with a factor less than 1, provided with an extra uniform outer contour, the width of which is in a fourth pre-determined dependency on said capital letter height, and that, upon re-scaling with factors larger than 1 a uniform inner contour is added, the width of which is in a fifth pre-determined dependency on said capital letter height.

8. A method as in Claim 7, characterized in that in the optical scaling to the desired point size, when starting from a master font in the size 12 pt, the linearily re-scaled letters are provided with an outer contour of a uniform width of approximately 0.5% of the capital letter height upon re-scaling to a font size 6 pt, and that upon re-scaling to a font size 24 pt a uniformly wide inner contour having a thickness of approximately 0.2% of said capital letter height is applied.

## Revendications

1. Procédé permettant la production de polices de caractères sur des organes de sortie à haute résolution, notamment des photocomposeuses, pourvus d'un processeur, d'une mémoire tampon pour stocker les données des polices de caractères ainsi que d'une unité de sortie, qui transfère les données issues de la mémoire tampon directement sur un support de reproduction, le processeur utilisant plusieurs matrices de polices de caractères, représentées par un codage numérique des contours, chaque caractère comportant plusieurs points discrets de contrôle définissant les contours du caractère ainsi que des instructions supplémentaires, telles qu'elles sont prescrites pour la "mise à l'échelle intelligente", une police sélectionnée pour la sortie selon sa graisse, son corps et sa longueur d'alphabet étant générée avant son transfert vers la mémoire tampon à partir de plusieurs matrices de polices de caractères stockées, en la mettant optiquement à l'échelle du corps souhaité, en la élargissant ou condensant selon la longueur d'alphabet souhaitée et en générant la graisse souhaitée,
caractérisé par
- la génération d'une police de caractères de sortie par interpolation mathématique linéaire entre deux matrices de polices de caractères de graisse différente,
- la mise à l'échelle optique par la mise à l'échelle de la police de caractères de sortie au corps souhaité utilisant les instructions pour générer une variation continue de l'épaisseur de trait des caractères obtenue par la mise à l'échelle avec le facteur linéaire, variation qui dépend du facteur selon une première relation pré-définie, l'épaisseur de trait étant augmentée selon le pourcentage résultant de la relation pré-définie pour des facteur inférieurs à un et étant réduite selon le pourcentage résultant de la relation pré-définie pour des facteur supérieurs à un,
- la génération de la longueur de l'alphabet souhaitée en élargissant ou condensant la police de sortie mise à l'échelle optiquement par un deuxième facteur linéaire atteignant ainsi la largeur souhaitée, en utilisant les instructions pour garder constante l'épaisseur de trait des caractères lorsqu'ils sont élargis ou condensés, élargissant ou condensant ainsi uniquement les espaces blancs.

2. Procédé selon revendication 1, caractérisé en ce que lors de la mise à l'échelle optique au corps souhaité en partant d'une police de caractères de corps 12 pt, l'épaisseur de trait des caractères est augmentée d'environ 5% pour une mise à l'échelle optique à 6 pt, et réduite d'environ 2% lors d'une mise à l'échelle à 24 pt.

3. Procédé selon une des revendications précédentes, caractérisé en ce que lors de la mise à l'échelle optique au corps souhaité, la largeur des caractères obtenue par une mis à l'échelle linéaire subit une variation qui dépend du facteur de mise à l'échelle selon une deuxième relation pré-définie, la largeur étant réduite pour des facteurs inférieurs à un et augmentée pour des facteurs supérieurs à un, et caractérisé par une variation de la hauteur des caractères minuscules qui dépend du facteur de mise à l'échelle selon une troisième relation pré-définie, la hauteur étant augmentée pour des facteurs inférieurs à un et la hauteur étant réduite pour des facteurs supérieurs à un.

4. Procédé selon revendication 3, caractérisé en ce que lors de la mise à l'échelle optique au corps souhaité, la largeur des caractères est augmenté d'environ 15% par rapport à une mise à l'échelle linéaire à 6 pt d'une matrice de police de caractères de 12 pt, et que la largeur des caractères est réduite d'environ 1% par rapport à une mise à l'échelle à 24 pt d'une matrice de police de caractères de 12 pt, et que la hauteur des caractères minuscules est augmentée d'environ 15% par rapport à une mise à l'échelle à un corps de 6 pt et que la hauteur des caractères minuscules est réduite d'environ 1% lors d'une mise à l'échelle à un corps de 24 pt.

5. Procédé selon une des revendications précédentes, caractérisé en ce que lors de la mise à l'échelle optique au corps souhaité, les espaces entre les lettres d'une police de caractères mise à l'échelle de façon linéaire sont élargis d'un pourcentage relatif à la hauteur des caractères majuscules pour des facteurs inférieur à un, et que les espaces entre les lettres sont réduits par un pourcentage relatif à la hauteur des caractères majuscules pour des facteurs inférieurs à un.

6. Procédé selon revendication 5, caractérisé en ce que lors de la mise à l'échelle optique au corps souhaité, les espaces entre les lettres sont élargis d'environ 6% de la hauteur des caractères majuscules lors d'une mise à l'échelle à un corps de 6 pt d'une matrice de police de caractères de 12 pt, et que les espaces entre les lettres sont réduits d'environ 4% de la hauteur des caractères majuscules lors d'une mise à l'échelle à un corps de 24 pt.

7. Procédé selon une des revendications précédentes, caractérisé en ce que lors de la mise à l'échelle optique au corps souhaité, un contour extérieur et uniforme est généré autour des caractères de la police mise à l'échelle de façon linéaire avec des facteurs inférieurs à un, contour dont l'épaisseur dépend de la hauteur des caractères majuscules selon une quatrième relation pré-définie, et un contour intérieur et uniforme est généré à l'intérieur des caractères de la police de caractères mise à l'échelle de façon linéaire avec des facteurs supérieurs à un, contour dont l'épaisseur dépend de la hauteur des caractères majuscules selon une cinquième relation pré-définie.

8. Procédé selon revendication 7, caractérisé en ce que lors de la mise à l'échelle optique au corps souhaité à partir d'une matrice de police de caractères de 12 pt, un contour extérieur d'une épaisseur uniforme d'environ 0,5% de la hauteur des caractères majuscules est généré autour des caractères de la police pour une mise à l'échelle à 6 pt, et un contour intérieur d'une épaisseur uniforme d'environ 0,2% de la hauteur des caractères majuscules est généré à l'intérieur des caractères de la police de caractères pour une mise à l'échelle à 24 pt.
